(19) **Europäisches Patentamt / European Patent Office / Office européen des brevets**

(11) **EP 1 886 517 B1**

(12) **FASCICULE DE BREVET EUROPEEN**

(45) Date de publication et mention
de la délivrance du brevet:
**19.05.2010 Bulletin 2010/20**

(51) Int Cl.:
*H04W 64/00* (2009.01)    *G01S 3/46* (2006.01)
*G01S 5/02* (2010.01)

(21) Numéro de dépôt: **06755533.4**

(22) Date de dépôt: **29.05.2006**

(86) Numéro de dépôt international:
**PCT/FR2006/001214**

(87) Numéro de publication internationale:
**WO 2006/129003 (07.12.2006 Gazette 2006/49)**

(54) **Procédé et dispositif de localisation d'un terminal dans un réseau local sans fil**

Verfahren und Einrichtung zur Ortsbestimmung eines Endgeräts in einem drahtlosen lokalen Netzwerk

Method and device for locating a terminal in a wireless local area network

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **31.05.2005 FR 0505509**

(43) Date de publication de la demande:
**13.02.2008 Bulletin 2008/07**

(73) Titulaire: **FRANCE TELECOM
75015 Paris (FR)**

(72) Inventeurs:
• **EVENNOU, Frédéric
  F-38100 Grenoble (FR)**
• **MARX, François
  F-38240 Meylan (FR)**
• **LAVAL, Jean-Paul
  F-38420 Le Versoud (FR)**

(74) Mandataire: **Joly, Jean-Jacques et al
Cabinet Beau de Loménie
158, rue de l'Université
75340 Paris cedex 07 (FR)**

(56) Documents cités:
**EP-A- 0 838 692      EP-A- 1 113 688
WO-A-00/50918      WO-A-03/092318
WO-A-2004/077374   US-A1- 2004 107 072**

• **EVENNOU F ET AL: "Map-aided indoor mobile
positioning system using particle filter"
WIRELESS COMMUNICATIONS AND
NETWORKING CONFERENCE, 2005 IEEE NEW
ORLEANS, LA, USA 13-17 MARCH 2005,
PISCATAWAY, NJ, USA,IEEE, 13 mars 2005
(2005-03-13), pages 2490-2494, XP010791567
ISBN: 0-7803-8966-2**
• **KURTH D ET AL: "Experimental results in range-
only localization with radio" 27 octobre 2003
(2003-10-27), PROCEEDINGS OF THE 2003
IEEE/RSJ INTERNATIONAL CONFERENCE ON
INTELLIGENT ROBOTS AND SYSTEMS. (IROS
2003). LAS VEGAS, NV, OCT. 27 - 31, 2003,
IEEE/RSJ INTERNATIONAL CONFERENCE ON
INTELLIGENT ROBOTS AND SYSTEMS, NEW
YORK, NY : IEEE, US, PAGE(S) 974-979 ,
XP010672632 ISBN: 0-7803-7860-1 le document
en entier**
• **BAHL P ET AL: "A software system for locating
mobile users: design, evaluation and lessons"
avril 2000 (2000-04), , XP002967193 Extrait de
l'Internet: URL:www.research.microsoft.com>
[extrait le 2000-04-01] le document en entier**

**Description**

L'invention concerne la localisation de terminaux de télécommunication dans un réseau local sans fil de type Wi-Fi. Elle se rapporte plus particulièrement à la localisation de terminaux dans des bâtiments clos, afin de pouvoir localiser un porteur du terminal, dans des réseaux sans fil de télécommunication ou de diffusion.

Plus précisément, elle vise à lever les ambiguïtés des résultats apportés par des premiers moyens de localisation utilisant au moins un signal provenant d'au moins une borne d'un réseau sans fil, en utilisant au moins un signal provenant de deuxièmes moyens de localisation.

L'invention concerne notamment un procédé de localisation d'un terminal dans un environnement équipé d'un ensemble de bornes de télécommunication d'un réseau local sans fil, le terminal comprenant des moyens de mesure inertielle, ledit procédé comprenant les étapes consistant à :

- stocker préalablement dans une base de données de référence, une pluralité de vecteurs respectivement associés à une pluralité de points différents dudit environnement, chaque vecteur ayant pour composantes des valeurs de puissances reçues en provenance des différentes bornes par un terminal positionné au point associé à ce vecteur,
- mesurer, depuis le terminal, les puissances reçues de certaines au moins des bornes de télécommunication,
- délivrer comme résultat de position, une identification du point auquel se trouve le terminal, ce point étant défini comme celui dont le vecteur de référence associé est le plus proche du vecteur que forment les puissances mesurées depuis le terminal.

De manière conventionnelle, pour localiser une personne ou un terminal dans une zone géographique donnée, on utilise généralement le système de positionnement GPS (« Global Positioning System ») ou le système GSM (« Global System for Mobile Communication »). Cependant, ces techniques sont difficilement envisageables en milieu clos, en raison de leurs mauvaises performances dans ces environnements « indoor ». En effet, dans le cas du GPS, il est difficile de recevoir un signal correct, et dans le cas du GSM, la précision n'est pas suffisante, qui doit être, dans l'application envisagée, de l'ordre de quelques mètres.

Il est connu de l'état de la technique antérieure, notamment dans la demande de brevet FR0401759 de la demanderesse, des procédés de localisation d'un terminal dans un environnement fermé (bâtiment) équipé de bornes de télécommunication pour un réseau local sans fil de type Wi-Fi.

De tels procédés utilisent, depuis un terminal, les mesures de puissance d'émission de bornes de télécommunication d'un réseau local sans fil, comparent ces puissances reçues en provenance de chaque borne avec des valeurs de puissance stockées dans une base de données, et qui correspondent chacune à une position du terminal par rapport aux bornes, et filtrent le résultat pour réduire l'effet du bruit inhérent aux mesures ; l'étape de filtrage utilisant un filtre particulaire ou un filtre de Kalman.

L'intérêt du filtrage est de limiter l'effet des fluctuations de puissance qui induisent des mouvements ou des positions incohérentes.

Au cours du filtrage particulaire, on modélise l'ensemble des positions possibles du terminal sous la forme de particules (une particule étant une position, que le terminal mobile qui cherche à se localiser, peut occuper) affectées chacune d'une probabilité de présence, on détermine a *priori* la nouvelle position possible de chaque particule et l'on corrige un poids affecté à la particule, à partir de nouvelles mesures de puissances.
L'exploitation de techniques de filtrage avancées comme celles-ci permettent d'obtenir une localisation en milieu clos (« indoor ») à deux mètres près pour un objet mobile.

Cependant certaines situations peuvent néanmoins conduire à des incertitudes, notamment, lorsque plusieurs choix s'offrent au filtre. Ces situations sont par exemple au niveau du choix de la pièce dans laquelle l'utilisateur, i.e. le porteur du terminal, est entré, lorsque, se déplaçant dans un long couloir, deux portes se trouvent ensuite en vis-à-vis. Il y a donc une ambiguïté possible, et celle-ci ne se trouve levée qu'au bout d'un certain temps (inertie du filtre).
De plus, la simple utilisation de la technologie radio, comme premiers moyens de localisation, ne permet pas de savoir instantanément si l'utilisateur est en mouvement ou non.
Enfin, la méthode précédente nécessite la constitution d'une base de donnée (par exemple correspondance entre position du terminal et puissance reçue des bornes) avant toute localisation.

Le document EVENNOU F ET AL : « map-aided indoor mobile positioning system using particle filter » WIRELESS COMMUNICATIONS AND NETWORKING CONFERENCE, 2005 IEEE NEW ORLEANS, LA, USA 13-17 MARCH 2005, PISCATAWAY, NJ, USA, IEEE, 13 mars 2005 (2005-03-13), pages 2490-2494, XP010791567 ISBN : 0-7803-8966-2, décrit un procédé de localisation selon le préambule de la revendication 1.

Le document KURTH D ET AL : « Experimental results in range-only localization with radio » 27 octobre 2003 (2003-10-27), PROCEEDINGS OF THE 2003 IEEE/RSJ INTERNATIONAL CONFERENCE ON INTELLIGENT ROBOTS AND SYSTEMS. 5IROS 2003). LAS VEGAS, NV, OCT. 27-31, 2003, IEEE/RSJ INTERNATIONAL CONFERENCE ON INTELLIGENT ROBOTS AND SYSTEMS, NEW YORK, NY : IEEE, US, pages 974-979, XP010672632 ISBN :

0-7803-7860-1 décrit un système de localisation intégrant la mesure de distance entre un terminal et différentes bornes fixes.

La présente invention a pour but de remédier à ces inconvénients en proposant une solution combinant des données provenant de deux moyens de localisation différents.

A cet effet, le procédé de l'invention, par ailleurs conforme au préambule cité en début de description, est essentiellement caractérisé en ce qu'il comprend, en outre,

- une étape de filtrage consistant à filtrer, par des moyens de filtrage, le résultat de position délivré, en tenant compte également de données de navigation inertielle fournies par les moyens de mesure inertielle, et
- une étape de correction consistant à corriger une dérive inertielle des moyens de mesure inertielle en tenant compte d'une trajectoire globale du terminal donnée par lesdits moyens de filtrage du résultat de position délivré.

Par l'effet de synergie apporté par l'utilisation de la trajectoire globale dans la correction des signaux fournis par les deuxièmes moyens de localisation, la précision de la localisation est améliorée.

On peut ainsi définir que des premiers moyens de localisation utilisent le positionnement radio par au moins une borne de télécommunication ou de diffusion. Et un premier signal provient notamment de la mesure de puissances issues d'au moins une borne d'un réseau sans fil.

Et des deuxièmes moyens de localisation utilisent le positionnement par des moyens de mesure inertielle, par exemple une centrale inertielle comprenant des capteurs de navigation inertielle (INS). Dans certains cas, les données fournies par les deuxièmes moyens de localisation (les données inertielles) sont soumises à des dérives dues au bruit et aux intégrations successives. Des moyens de correction du signal fourni par les deuxièmes moyens de localisation, notamment un filtre de Kalman, peuvent être envisagés pour réduire l'effet de ce bruit de mesure. Dans un mode de réalisation, il est prévu une étape de filtrage des données de navigation inertielle consistant à filtrer au moins certaines des données de navigation inertielle issues des moyens de mesure inertielle.

La détermination de la position peut être faite par une distribution de probabilité de position de l'objet, fonction des premiers et deuxièmes signaux reçus respectivement des premiers et des deuxièmes moyens de localisation, par exemple par un filtre particulaire.

Pour plus de lisibilité, dans la présente demande, on entend par filtre particulaire tout filtre dont la fonction est de lisser les erreurs de localisation en fonction d'informations de différentes natures. La distribution obtenue par ce type de filtre peut aussi être obtenue, par exemple, par un filtre de Monte Carlo.

Dans un mode de réalisation, lors de l'étape de filtrage du résultat de position délivré, on modélise alors une position possible que peut avoir le terminal par un ensemble de particules, une probabilité de présence étant affectée à chacune des dites particules.

De préférence, lors de l'étape de filtrage du résultat de position délivré, des paramètres sont modélisés en densités de probabilité afin de déterminer les probabilités de présence à affecter aux particules, lesdits paramètres comprenant au moins l'une des informations du groupe comportant des informations de puissances reçues, des informations de navigation inertielle et des informations relatives à l'environnement du terminal.

Dans un mode de réalisation, pour déterminer la position du terminal, il est prévu une étape de détermination a priori de la position des particules, tenant compte au moins, pour une particule, de sa dernière position connue, d'une vitesse de la particule et d'une information représentative d'un état du terminal, indiquant s'il se déplace ou non, obtenue à partir des données fournies par les moyens de mesure inertielle.

De préférence, pour déterminer la position du terminal, il est prévu une étape de détermination a posteriori de la position des particules tenant compte de nouvelles mesures de puissances reçues de certaines au moins des bornes de télécommunication.

Dans un mode de réalisation, le filtre particulaire (« bootstrap filter » en anglais) intègre les données de navigation inertielle issues de la centrale inertielle dont au moins certaines sont corrigées par un filtre de Kalman.

Grâce à cette combinaison, le positionnement du terminal est plus précis.

Dans un mode de réalisation, la détermination de la position est fonction d'une position antérieure connue.

Par cet effet de synergie apporté par l'utilisation d'une position antérieure connue en plus des signaux fournis par les premiers et deuxièmes moyens de localisation dans la détermination de la nouvelle position, la précision de la localisation est également améliorée.

Avantageusement, la position antérieure connue est la dernière position obtenue. A titre d'alternative, elle correspond à la dernière position obtenue dont la probabilité est supérieure à un seuil prédéterminé, afin que les calculs de position se fassent à partir d'une position obtenue avec une meilleure précision.

Dans un mode de réalisation préférentiel, on restreint l'atteinte de la valeur seuil sur une période de temps donnée. Par exemple, on établit un système de seuillage afin de vérifier si le mobile est en mouvement : si au cours d'une période de quelques millisecondes (dépendant du taux de rafraîchissement des données INS), le signal provenant de capteurs d'accélération a franchi le seuil, l'objet est considéré comme en mouvement.

Dans un mode de réalisation, l'étape de détermination de la position à laquelle se trouve l'objet est fonction de la mesure de la vitesse angulaire de l'objet fournie par les deuxièmes moyens de localisation.

A titre d'alternative ou de complément, l'étape de détermination de la position à laquelle se trouve l'objet est fonction d'un signal, fourni par les deuxièmes moyens de localisation, permettant d'obtenir une indication de la position sur l'axe vertical.

L'invention présente en outre, au niveau des moyens de mesure inertielle, par exemple une centrale inertielle, des capteurs délivrant des informations inertielles (vitesse angulaire, déplacement du terminal par rapport au nord magnétique, accélération du terminal suivant au moins une direction de l'espace, la pression atmosphérique (altitude), nombre de pas parcourus par un porteur du terminal...).

Ainsi, en tenant compte des mouvements de l'utilisateur à l'aide des capteurs de navigation inertielle et de la technique de navigation de localisation radio combinée avec un filtre, par exemple particulaire, on peut obtenir un mouvement plus fluide et beaucoup plus sensible aux changements d'état de l'utilisateur (marche/arrêt, déplacement en ligne droite/virage).

Enfin, en tenant compte de la structure du bâtiment, on élimine tous les mouvements irréalistes comme celui de traverser un mur.

Dans un mode de réalisation, l'invention comprend en outre des étapes de mise à jour et de correction de la mesure de la vitesse angulaire du terminal, dans lesquelles les indications provenant de la trajectoire globale du terminal donnée par le filtre particulaire sont utilisées pour corriger la dérive inertielle. L'outil mathématique utilisé pour réaliser ces étapes de correction et de mise a jour peut être un filtre de Kalman appliqué à cette donnée (angle duquel le terminal a tourné).

Ainsi l'angle qui est retourné à cette étape peut être réutilisé par le filtre particulaire afin de guider plus précisément les particules.

Les bornes de télécommunication ou de diffusion d'un réseau local sans fil sont des bornes par exemple de type Wi-Fi, Bluetooth ou Zigbee, etc...

La détermination de la position peut être effectuée à partir de signaux provenant d'une ou plusieurs bornes. L'augmentation du nombre de bornes utilisées permet de lever des ambiguïtés de positions mais la diminution du nombre de bornes utilisées permet de fournir une zone de localisation plus étendue. Dans un mode de réalisation, l'invention peut s'adapter au nombre de bornes disponibles afin d'offrir une grande zone de couverture tout en permettant une gradation de la précision jusqu'à une très grande précision dans certaines parties de cette zone de couverture.

L'invention concerne également un terminal configuré pour être localisé dans un environnement équipé d'un ensemble de bornes de télécommunication d'un réseau local sans fil, le terminal comprenant au moins

    • des moyens de mesure inertielle,
    • des moyens pour mesurer, depuis le terminal, les puissances reçues de certaines au moins des bornes de télécommunication,
    • des moyens pour délivrer comme résultat de position, une identification du point auquel se trouve le terminal, défini comme celui dont un vecteur de référence associé est le plus proche du vecteur que forment les puissances mesurées depuis le terminal, ledit vecteur de référence étant extrait d'une base de données de référence contenant une pluralité de vecteurs de référence respectivement associés à une pluralité de points différents dudit environnement, chaque vecteur ayant pour composantes des valeurs de puissances reçues en provenance des différentes bornes par un terminal positionné au point associé à ce vecteur.

Selon l'invention, le terminal est essentiellement caractérisé en ce qu'il comprend, en outre,

    • des moyens de filtrage agencés pour filtrer le résultat de position délivré en tenant compte également de données de navigation inertielle issues des moyens de mesure inertielle, et
    • des moyens de correction agencés pour corriger une dérive inertielle des moyens de mesure inertielle en tenant compte d'une trajectoire globale du terminal donnée par lesdits moyens de filtrage du résultat de position délivré.

Dans un mode de réalisation, le terminal comprend des moyens de communication avec un serveur de localisation.

Avantageusement, le terminal comprend des moyens pour filtrer au moins certaines des données de navigation inertielle issues des moyens de mesure inertielle.

Dans un mode de réalisation, le terminal est muni en outre de moyens pour stocker ladite base de référence.

Dans un mode de réalisation, le terminal comprend au moins des moyens de mesure inertielle, par exemple une centrale inertielle, et des moyens de communication avec un serveur de localisation si la localisation n'est pas effectuée sur le terminal (par exemple si les ressources de calcul du terminal sont insuffisantes).

Selon le mode de réalisation préféré, la centrale inertielle contient au moins l'un des dispositifs permettant de, par exemple, mesurer la vitesse angulaire, la direction angulaire du déplacement du terminal par rapport au nord magnétique, l'accélération verticale (liée à la marche), la pression atmosphérique (altitude), compter le nombre de pas effectués par un porteur du terminal.

L'invention concerne également un serveur de localisation configuré pour localiser, dans un environnement équipé d'un ensemble de bornes de télécommunication d'un réseau local sans fil, un terminal équipé au moins de moyens de mesure inertielle, le serveur comprenant au moins

• des moyens de communication avec le terminal,
• des moyens pour stocker dans une base de données de référence, une pluralité de vecteurs respectivement associés à une pluralité de points différents dudit environnement, chaque vecteur ayant pour composantes des valeurs de puissances reçues en provenance des différentes bornes par un terminal positionné au point associé à ce vecteur,
• des moyens pour délivrer comme résultat de position, une identification du point auquel se trouve le terminal, ce point étant défini comme celui dont le vecteur de référence associé est le plus proche, au sens de la distance euclidienne, du vecteur que forment les puissances mesurées depuis le terminal.

Selon l'invention, le serveur est essentiellement caractérisé en ce qu'il comprend, en outre,

- des moyens de filtrage pour filtrer le résultat de position en tenant également compte de données de navigation inertielle issues de la centrale inertielle et
- des moyens pour commander une correction d'une dérive inertielle des moyens de mesure inertielle du terminal en tenant compte d'une trajectoire globale du terminal donnée par lesdits moyens de filtrage du résultat de position délivré.

Ce serveur peut ne fournir que les informations nécessaires au client s'étant enregistré (informations de plan de la zone dans laquelle il entre), ou bien n'effectuer que les traitements nécessaires permettant d'obtenir la localisation du mobile.

Le serveur comprend notamment des moyens de communication avec le terminal, et peut aussi posséder des moyens de filtrage combiné, par exemple filtre de Kalman / filtre particulaire.

L'invention porte également sur un système de localisation d'un terminal dans un environnement équipé d'un ensemble de bornes de télécommunication d'un réseau local sans fil, le système comprenant au moins

• un terminal équipé au moins de moyens de communication avec un serveur de localisation, et d'une centrale inertielle délivrant des données de navigation inertielle,

• un serveur de localisation équipé de moyens de communication avec le terminal,

système dans lequel

• une pluralité de vecteurs, respectivement associés à une pluralité de points différents dudit environnement, sont stockés préalablement dans une base de données de référence ; chaque vecteur ayant pour composantes des valeurs de puissances reçues en provenance des différentes bornes par un terminal positionné au point associé à ce vecteur,
• la puissance reçue de certaines au moins des bornes de télécommunication est mesurée depuis le terminal,
• une identification du point auquel se trouve le terminal est délivrée comme résultat de position, ce point étant défini comme celui dont le vecteur de référence associé est le plus proche, au sens de la distance euclidienne, du vecteur que forment les puissances mesurées depuis le terminal.

Le système est essentiellement caractérisé en ce que

• des moyens de filtrage, notamment utilisant un filtre de Kalman, filtrent au moins certaines des données de navigation inertielle issues de la centrale inertielle,
• des moyens de correction corrigent une dérive inertielle des moyens de mesure inertielle du terminal en tenant compte d'une trajectoire globale du terminal donnée par lesdits moyens de filtrage du résultat de position délivré.

De préférence, le système est tel que les bornes de télécommunication d'un réseau local sans fil sont des bornes de type Wi-Fi, Wimax, Bluetooth ou Zigbee.

Un autre objet de l'invention porte sur un programme d'ordinateur pour terminal, pour la localisation dudit terminal dans un environnement équipé d'un ensemble de bornes de télécommunication d'un réseau local sans fil, ledit programme comprenant des instructions de programme pour commander l'exécution par ledit terminal, lorsque le programme est exécuté par celui-ci, des étapes consistant au moins à:

- • mesurer, depuis le terminal, les puissances reçues de certaines au moins des bornes de télécommunication,
- • délivrer comme résultat de position, une identification du point auquel se trouve le terminal, ce point étant défini comme celui dont un vecteur de référence associé est le plus proche du vecteur que forment les puissances mesurées depuis le terminal, ledit vecteur de référence étant extrait d'une base de données de référence comprenant une pluralité de vecteurs respectivement associés à une pluralité de points différents dudit environnement, chaque vecteur ayant pour composantes des valeurs de puissances reçues en provenance des différentes bornes par un terminal positionné au point associé à ce vecteur,
- • filtrer, à l'aide de moyens de filtrage, le résultat de position délivré, en tenant compte également de données de navigation inertielle fournies par les moyens de mesure inertielle, et
- • corriger une dérive inertielle des moyens de mesure inertielle en tenant compte d'une trajectoire globale du terminal donnée par lesdits moyens de filtrage du résultat de position délivré.

Enfin l'invention porte sur un support de programme, lisible par un ordinateur, sur lequel est enregistré le programme susmentionné.

Quelle que soit son objet (procédé, dispositif, terminal, serveur ou système), l'invention peut utiliser une base de données de localisation pour calculer la position du porteur par les premiers moyens de localisation. Cette base de données peut être localisée sur le terminal ou déportée sur le serveur. Grâce aux deuxièmes moyens de localisation, l'invention permet également, le cas échéant, de construire ou d'affiner la base de données de localisation.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1 représente une vue schématique d'un bâtiment clos (B) dans lequel on souhaite localiser un terminal,
- la figure 2 représente un schéma de fonctionnement du procédé selon l'invention,

L'invention se rapporte aux techniques de localisation utilisant une technologie radio à courte portée pour localiser un utilisateur (personne ou matériel) disposant d'un récepteur radio (terminal), couplées à des techniques permettant d'améliorer la précision de la localisation en utilisant, de préférence, des filtres pour diminuer le bruit sur les mesures (WiFi et INS).

L'apport d'informations supplémentaires sur le comportement de l'utilisateur à l'aide des capteurs de navigation inertielle, intégrés au terminal, permet d'accroître la précision de la localisation, et de lever l'ambiguïté qui peut être liée à des changements de direction par exemple.

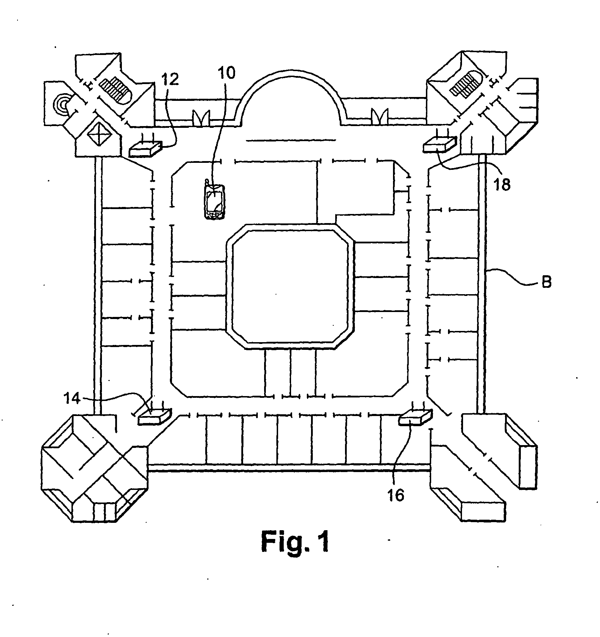

L'invention concerne notamment un procédé de localisation d'un terminal 10 dans un environnement B, voir figure 1. L'environnement B est équipé d'un ensemble de bornes 12, 14, 16, 18 de télécommunication, ou de diffusion, d'un réseau local sans fil. Le terminal comprend des moyens de mesures inertielles, par exemple une centrale inertielle, comprenant au moins un capteur, délivrant des données de navigation (INS).

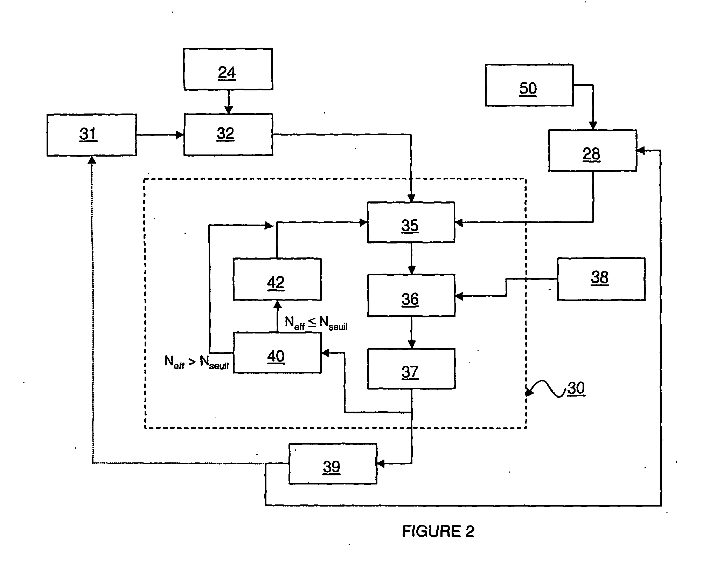

Comme représenté sur la figure 2, le procédé comprend, dans un mode de réalisation particulier, une étape préalable consistant à stocker dans une base de données 24 de référence, une pluralité de vecteurs, caractérisant de manière électrique certaines positions du bâtiment, respectivement associés à une pluralité de points différents dudit environnement B.

Chaque vecteur a pour composantes, soit des valeurs de puissances reçues en provenance des différentes bornes par un terminal positionné au point associé à ce vecteur, soit la distribution de puissance des signaux reçus pour chacune des bornes captées.

De manière conventionnelle, on mesure alors, depuis le terminal 10, les puissances reçues 31 de certaines au moins des bornes 12, 14, 16, 18 de télécommunication, et on délivre comme résultat de position 32, une identification du point Z auquel se trouve le terminal d'après la mesure WiFi effectuée et la base de données disponible.

Ce point est défini comme celui dont le vecteur de référence associé est le plus proche, au sens de la distance euclidienne, du vecteur que forment les puissances mesurées depuis le terminal.

Typiquement, on cherche le point Z de l'espace du bâtiment et de la base de données tel que

$$Z = \underset{z\in(x,y) \text{ de la base de données}}{\arg\min} \sum_{\text{toutes les bornes}} (Pborne_i(x,y) - Pborne_i(reçu))^2$$

Z correspond donc au point de la grille de la base de données dont le terminal est le plus proche.

Dans un mode de réalisation de l'invention, le procédé comprend, en outre, les étapes consistant à :

• filtrer, par des moyens de filtrage utilisant par exemple un filtre de Kalman 28, au moins certaines des données de navigation inertielle issues de la centrale inertielle 50, si nécessaire, et

• filtrer, par des moyens de filtrage utilisant par exemple un filtre particulaire 30, le résultat de position, en intégrant également les données de navigation inertielle issues de la centrale inertielle dont au moins certaines sont corrigées par le filtre de Kalman 28 (si nécessaire), et des données issues de la localisation par WiFi.

De préférence, le procédé comprend en outre, au niveau de la centrale inertielle, au moins l'une des étapes consistant à générer un signal dont la valeur correspond à la mesure de

• la vitesse angulaire du terminal,
• la direction du déplacement du terminal par rapport au nord magnétique,
• l'accélération du terminal suivant au moins une direction de l'espace,
• la pression atmosphérique, ou l'altitude
• le nombre de pas parcourus par un porteur du terminal.

Ainsi, grâce aux filtres, la combinaison de la localisation obtenue par le système radio et celle délivrée par les capteurs de navigation inertielle permet d'améliorer la précision de la localisation de l'ordre du mètre.

Dans un mode de réalisation, un filtre de Kalman pourra notamment réduire la dérive des données de navigation inertielle en tenant compte des données issues de la localisation par les premiers moyens de localisation, par exemple système WiFi, au sein d'une centrale de navigation, et ces données de navigation inertielle, issues des deuxièmes moyens de localisation, peuvent être réintroduites dans un filtre, par exemple particulaire, pour affiner la localisation par système radio.

L'introduction de données de navigation inertielle dans le système de filtres permet d'affiner la localisation Wi-Fi et de lever l'ambiguïté qui peut exister lors de certaines situations (choix de la pièce dans laquelle l'utilisateur est entré lorsque deux portes se trouvent en vis-à-vis par exemple).

De plus, la présente invention permet d'accroître la zone de localisation. En effet, certaines zones peuvent ne pas être couvertes par le système radio, dans ce cas les capteurs inertiels vont continuer à fournir des informations sur le comportement du porteur du terminal. Ces données vont conduire à une estimation de la position du terminal malgré la défaillance du système radio (navigation à l'estime). Lorsque la localisation par radio est de nouveau disponible, les dérives de positionnement dues aux bruits des différents capteurs, sont corrigées.

Ainsi, la présente invention permet également d'aider à la construction, i.e. construire ou affiner, la base de données utilisée par le système de localisation par radio (construction automatique de la base de données) puisque le système de navigation à l'estime fournit des informations sur la position de l'utilisateur dans l'environnement à tout instant aux erreurs près dues à la dérive entraînée par le bruit entachant les mesures.

L'étape consistant à générer un signal dont la valeur correspond à la mesure de la vitesse angulaire du terminal peut être réalisée par un gyroscope.

Un gyroscope délivre la vitesse angulaire instantanée du capteur. Ainsi afin de connaître l'angle θ duquel le terminal a tourné, il est nécessaire d'intégrer cette valeur au cours du temps :

$$\theta_t = \sum_{k=0}^{t} (\dot{\theta}_k - \dot{\theta}_{k-1}) * \Delta t_k$$

Ainsi il est possible de connaître en permanence l'angle duquel a tourné le capteur depuis sa mise sous tension. Cependant, ces mesures sont bruitées (bruit du au capteur), ce qui introduit une certaine dérive au cours du temps du fait de l'intégration (sommation en discret). Au bout d'un certain temps de fonctionnement, qui est de quelques minutes, les données provenant de ce capteur ne sont plus correctes. Il est donc nécessaire de corriger cette donnée.

Dans un mode de réalisation, le procédé comprend donc des étapes de mise à jour et de correction de la mesure de la vitesse angulaire du terminal, dans lesquelles les indications provenant de la trajectoire globale du terminal donnée par le filtre particulaire sont utilisées pour corriger la dérive inertielle, et un filtrage de Kalman est effectué pour suivre l'évolution de la valeur de l'angle duquel le terminal a tourné, où les étapes de mise à jour et de correction sont les suivantes :

$$\theta_k^- \ = \ \theta_{k-1} - \dot{\theta}_k * \Delta t$$

$$P_k^- \ = \ Q \ + \ P_{k-1}$$

$$K_k \ = \ P_k^- * [P_k^- + R]^{-1}$$

$$\theta_k \ = \ \theta_k^- \ + \ K_k\{ [\theta_{\text{trajectory}} - \theta_k^-] - \text{Ent}[0,5 + (\theta_{\text{trajectory}} - \theta_k^-) / \Pi] * \Pi\}$$

$$P_k \ = \ (1-K) * P_k^-$$

où

- $\theta_{\text{trajectory}}$ est l'angle calculé pour la trajectoire qui est retournée par la mesure des puissances reçues,
- $\theta_k$ est l'angle du dispositif permettant de mesurer la vitesse angulaire après correction,

- $\theta_k^-$ est l'angle brut du dispositif permettant de mesurer la vitesse angulaire sans correction,

- Ent[] est la partie entière,
- K est le gain de Kalman
- Q est est la covariance du bruit entachant le processus d'estimation a priori
- R est la covariance du bruit entachant les mesures

En effet, les indications provenant de la trajectoire globale du mobile (donnée par le filtre particulaire, et tenant compte de la mesure radio Wi-Fi) doivent être utilisées pour corriger la dérive inertielle. Ainsi un filtrage de Kalman est effectué pour suivre l'évolution de cette valeur d'angle et ainsi être plus robuste aux dérives du capteur.

Le filtrage particulaire est un filtre qui permet d'intégrer plusieurs informations de différentes natures, à savoir des informations de puissances (ou de position prédite par l'emploi d'une base de données), un plan de l'environnement dans lequel se trouve immergé le mobile, des informations de navigation inertielle (vitesse et accélération du mobile, direction du déplacement avec un compas ou un gyroscope...). Ceci est rendu possible par le fait que le filtre emploie des densités de probabilité qui modélisent ces différents paramètres.

Le filtrage particulaire est réalisé par l'emploi d'un ensemble de particules qui modélisent une position possible que peut avoir le terminal, et à chacune de ces particules est affecté un poids (ou probabilité) de présence. Il se déroule, cf. figure 2, en deux étapes : une première étape 35 de détermination a priori et une deuxième étape 37 de détermination a posteriori.

Dans un mode de réalisation, le filtre particulaire peut être défini selon les deux équations suivantes :

- 

$$X_k = f_k(X_{k-1}, \upsilon_{k-1})$$

$$Z_k = h_k(X_k, \eta_k)$$

où $Z_k$ est la position correspondant à la nouvelle mesure de puissances reçues et extraite de la base de données par « fingerprinting » (correspondance entre niveau des puissances reçues et position du terminal), et $X_k$ est un vecteur contenant la position et la vitesse du terminal.

$v_{k-1}$ et $\eta_k$ désignent deux bruits aléatoires, éventuellement gaussiens.

$f_k$ et $h_k$ désignent deux fonctions, éventuellement non-linéaires, où $f_k$ permet de déterminer la position a *priori* du terminal en fonction de l'historique de positions précédentes et $h_k$ de relier la position a *priori* à l'ensemble des mesures disponibles. Et le poids $w^i_{k+1}$ d'une particule i est lié au poids $w^i_k$ de cette particule à l'instant k précédent et est défini selon la relation suivante :

$$w^i_{k+1} \propto w^i_k * \frac{\Pr\left[Z_k \middle| x^i_k\right] \Pr\left[x^i_k \middle| x^i_{k-1}\right]}{q\left(x^i_k \middle| x^i_{k-1}, Z_k\right)}$$

$$\Pr\left[x^i_k \middle| x^i_{k-1}\right], \quad \Pr\left[x^i_k \middle| x^i_{k-1}\right] \quad et \quad q\left(x^i_k \middle| x^i_{k-1}, Z_k\right)$$

dans laquelle :

désignent respectivement la probabilité de présence a priori d'une particule, la probabilité de présence a *posteriori* calculée, et une fonction d'importance pénalisant les déplacements improbables, de sorte à diminuer l'effet du tirage aléatoire qui est fait lors de l'étape a *priori*.

Pour l'étape de détermination a priori, la position a *priori* de chaque particule est déterminée seulement par sa dernière position connue. Ainsi de façon à faire que les particules explorent de manière aléatoire le bâtiment, on utilise un bruit de puissance judicieusement déterminé de façon à ce que les particules bougent entre deux mesures successives. Pour cela, dans un mode de réalisation, l'étape de détermination de la position utilise une équation de mouvement fonction :

- d'au mois une position antérieure de l'objet connue,
- et d'au moins un signal fourni par les deuxièmes moyens de localisation.

Dans un mode particulier, on utilise la loi d'équation du mouvement, où chaque particule possède comme paramètre sa position (x,y), sa vitesse (Vx, Vy) et son poids. Soit, pour une particule :

$$\begin{bmatrix} x_{k+1} \\ y_{k+1} \\ V_{xk+1} \\ V_{yk+1} \end{bmatrix} = \begin{bmatrix} 1 & 0 & D*T_s & 0 \\ 0 & 1 & 0 & D*T_s \\ 0 & 0 & \cos(O_{gyro}) & 0 \\ 0 & 0 & 0 & \sin(O_{gyro}) \end{bmatrix} \begin{bmatrix} x_k \\ y_k \\ V_{xk} \\ V_{yk} \end{bmatrix} + \begin{bmatrix} \frac{T_s^2}{2} & 0 & 0 & 0 \\ 0 & \frac{T_s^2}{2} & 0 & 0 \\ 0 & 0 & T_s & 0 \\ 0 & 0 & 0 & T_s \end{bmatrix} \begin{bmatrix} v_{xk} \\ v_{yk} \\ v_{xk} \\ v_{yk} \end{bmatrix}$$

où

- $X_{k+1}$ et $y_{k+1}$ désignent les coordonnées déterminées a priori de la particule,
- $x_k$ et $y_k$ désignent les coordonnées de la particule déterminées à partir d'une mesure de puissances précédente,
- $Vx_{k+1}$ et $Vy_{k+1}$ désignent la vitesse de la particule selon les directions x et y,
- $\upsilon_{xk}$ et $\upsilon_{yk}$ désignent un bruit dans les directions x et y traduisant le déplacement de la particule entre deux mesures consécutives,
- $D \in \{0,1\}$ représente un état indiquant si le terminal se déplace ou non. Typiquement, si le terminal se déplace, la nouvelle position occupée par chacune des particules doit être différente de la précédente, sinon il ne faut pas que les particules se déplacent. Cette information est obtenue, par exemple, par les données retournées par les accéléromètres.
- Ts représente le temps qui s'est écoulé entre deux mesures WiFi successives.
- $\theta_{gyro}$ est l'angle retourné par le signal dont la valeur correspond à la mesure de la vitesse angulaire du terminal - après correction par un filtre de Kalman (issu de la centrale de navigation par système inertiel).

Pour l'étape de détermination *a posteriori,* il est nécessaire de tenir compte de la nouvelle mesure de puissances reçues et, si disponible, d'informations sur la structure du bâtiment. Il est ainsi possible de tenir compte des murs et de pénaliser, voire d'éliminer les particules qui ont traversé un mur.

Dans un mode de réalisation, la nouvelle position $Z_k$ déterminée par l'ensemble des puissances reçues est introduite dans le filtre particulaire par la densité de probabilité suivante :

$$\Pr\left[Z_k \middle| x_k^i\right] = \exp\left[\frac{(X_{Z_k} - X_{x_k^i})^2 + (Y_{Z_k} - Y_{x_k^i})^2}{\sigma^2}\right]$$

où cette densité de probabilité est, de préférence, une loi gaussienne centrée sur la position issue de la mesure, et d'écart type choisi de façon à représenter une distance réaliste que peut parcourir le terminal entre deux mesures successives.

Aussi, le nouveau poids de la particule est déterminé, selon la relation suivante :

$$w_{k+1}^i \propto w_k^i * \Pr\left[Z_k \middle| x_k^i\right] * \Pr\left[x_k^i \middle| x_{k-1}^i\right]$$

Une étape de normalisation des poids peut ensuite être effectuée afin d'obtenir la densité de probabilité suivante :

$$w_k^i = \frac{w_k^i}{\sum_{k=1}^{Ns} w_k^i}$$

où Ns est le nombre total de particules qui explorent l'environnement.

En référence, toujours, à la figure 2, l'étape 36 correspond à la recherche de particules qui ont traversé un mur à l'aide du plan du bâtiment fourni en 38. Typiquement, on recherche les particules qui ont traversé un mur en utilisant une base de données illustrant une vue du bâtiment ou, de manière générale, dans laquelle sont stockées des informations de déplacements improbables.

A chaque réception de nouvelle mesure, le filtre évolue, et le poids des particules évolue. Il arrive un moment où certaines particules, explorant aléatoirement l'environnement, ou ayant traversé un mur, vont obtenir un poids extrêmement faible, voir nul, quand d'autres, qui auront bien suivi l'évolution du déplacement du mobile, auront un poids significatif. Cette dégénérescence du filtre peut aller jusqu'à ce que plus qu'une seule et unique particule survive, ce qui est un des inconvénients du filtre.

Pour éviter d'aboutir à une telle dégénérescence, dans un mode de réalisation, une étape de ré-échantillonnage est nécessaire et permet de ramener les particules qui ont un poids très faible (présence du terminal dans cette zone très improbable), dans la zone dans laquelle le mobile se trouve probablement, c'est-à-dire autour des particules qui ont un poids significatif.

L'étape de ré-échantillonnage 42 a lieu lorsque nombre de particules $N_{eff}$ en vigueur est inférieur à une valeur de seuil $N_{seuil}$, ce test 40 étant réalisé à partir de la relation suivante :

$$N_{eff} = \frac{1}{\sum\limits_{i=1}^{Ns} \left(w_k^i\right)^2} \leq N_{seuil}$$

Où, de préférence, $N_{seuil}$ = Ns / 100.

L'étape de ré-échantillonnage 42 vise à réintroduire une certaine diversité parmi les particules, et comprend les étapes suivantes :

A) calculer la matrice de covariance $S_k$ des particules

$$\left\{x_k^i, w_k^i\right\}_{i=1}^{Ns}$$

B) calculer $D_k$ tel que $S_k = D_k D_k^T$
C) ré-échantillonner par les étapes logiques suivantes :

a. initialiser le vecteur fonction de répartition cumulée CDF tel que CDF (1)=0,
b. construire CDF tel que

$$CDF(i) = CDF(i-1) + w_k^i \text{ avec } i = \left\{2:N_s\right\},$$

c. initialiser i à 1,
d. tirer aléatoirement une valeur u(1) dans une loi uniforme $U[0,N_s^{-1}]$,
e. parcourir CDF : $j = \{1: N_s\}$

i. u(j) = u(1)+ (j-1)/Ns
ii. tant que u(j) > CDF(i) alors i=i+1
iii.

$$x_k^i = x_k^i \text{ et } w_k^j = N_x^{-1}$$

f. parcourir les particules : $i=\{1:N_s\}$

i. tirer aléatoirement un bruit $\varepsilon^i$ dans un noyau (gaussien, Epanechnikov,...)
ii. mettre à jour la nouvelle position des particules tel que :

$$x_k^i = x_k^i + h_{opt} D_k \varepsilon^i$$

Ce dernier bruit permettant de réintroduire une nouvelle diversité autour des positions intéressantes, où, dans le cas d'un noyau gaussien, la constante $h_{opT}$ s'exprime de la manière suivante :

$$h_{opt} = A(K)N_s \exp\left(\frac{1}{n_x + 4}\right) \text{ et } A(K) = \left(\frac{4}{n_x + 2}\right)^{\frac{1}{n_x + 4}}{}^{20}$$

Où $n_x$ désigne la dimension de l'espace dans lequel on se situe. De préférence, ici $n_x = 4$.

Le procédé met à jour le nouveau poids de chaque particule et détermine à l'étape 39 la nouvelle position. De préférence, la position retournée par le filtre est le barycentre des coordonnées de toutes les particules.

Dans un autre mode de réalisation, les particules peuvent être contraintes à se déplacer sur les arrêtes d'un graphe de Voronoi (modèle du bâtiment (B) élaboré à partir d'un diagramme de Voronoi du bâtiment). Le modèle comprend un ensemble de trajets possibles pour les particules selon lesquels elles sont autorisées à se déplacer.

Dans ce cas il est tout à fait possible de combiner les informations provenant des capteurs de navigation inertielle dans le filtre particulaire associé à cette technique. Dans cette configuration, l'angle retourné par le gyroscope permet de choisir l'arc suivant sur lequel doivent se déplacer les particules lorsqu'elles changent d'arc.

Dans les techniques de l'art antérieur, un choix aléatoire de l'arc était en place, avec une préférence pour les arcs se trouvant à Pi radians de l'arc duquel elles se trouvaient (situation de déplacement vers l'avant). Aussi le choix présent respecte le vrai comportement de l'utilisateur, ce qui n'était pas possible avec le système précédent.

De la même manière que pour le filtre particulaire traditionnel, il est possible d'immobiliser les particules si les accéléromètres indiquent que le terminal n'est pas en déplacement.

Ainsi, la détermination de la position peut être fonction de l'état de l'objet, ledit état étant fourni par les deuxièmes moyens de localisation.

L'invention concerne également un dispositif de localisation. Ce dispositif comprend des moyens aptes à déclencher la mise en oeuvre d'une détermination de position à partir de signaux provenant de premiers et deuxièmes moyens de localisation différents. Le signal fourni par les premiers moyens provient d'au moins une borne d'un réseau sans fil.

Dans un mode de réalisation, le dispositif comprend les premiers moyens de localisation.

A titre d'alternative, il comprend des moyens de réception des signaux de ces premiers moyens de localisation.

Dans un autre de mode de réalisation, le dispositif comprend les deuxièmes moyens de localisation.

A titre d'alternative, il comprend des moyens de réception des signaux des deuxièmes moyens de localisation.

Dans un autre de mode de réalisation, le dispositif comprend des moyens de détermination de position.

A titre d'alternative, il comprend des moyens de communication avec des moyens de détermination de position, les moyens de communication permettant de recevoir la position déterminée par les moyens de détermination de position.

Le dispositif selon l'invention peut implémenter l'une quelconque des combinaisons des variantes ci-dessus.

L'invention concerne également un terminal. 10 configuré pour être localisé dans un environnement B équipé d'un ensemble de bornes 12, 14, 16, 18 de télécommunication d'un réseau local sans fil. Le terminal comprend au moins :

- des moyens aptes à déclencher la mise en oeuvre d'une détermination de position à partir de premiers et deuxièmes signaux provenant respectivement de premiers et deuxièmes moyens de localisation différents, ledit premier signal étant fourni par les premiers moyens de localisation, ledit premier signal comportant au moins une mesure des puissances reçues depuis le terminal, et provenant d'au moins une borne d'un réseau sans fil,

- et des moyens pour délivrer la position déterminée.

Dans un mode de réalisation, les deuxièmes moyens de localisation sont des moyens de mesure inertielle, par exemple une centrale inertielle.

Il peut comprendre des moyens pour stocker préalablement dans une base de données 24 de référence, une pluralité de vecteurs respectivement associés à une pluralité de points différents dudit environnement B, chaque vecteur ayant pour composantes des valeurs de puissances reçues en provenance des différentes bornes par un terminal positionné au point associé à ce vecteur, ou des éléments caractérisant la distribution de probabilité associée aux puissances reçues en cette position.

Le terminal comprend en outre des moyens pour mesurer, depuis le terminal, les puissances reçues de certaines au moins des bornes 12, 14, 16, 18 de télécommunication, et des moyens pour délivrer comme résultat de position, une identification du point auquel se trouve le terminal.

Ce point étant défini comme celui dont le vecteur de référence associé est le plus proche, au sens de la distance euclidienne, du vecteur que forment les puissances mesurées depuis le terminal avec ceux contenus dans la base de données.

Selon l'invention, le terminal comprend en outre des moyens de communication avec un serveur de localisation pour obtenir des informations de cartographie du bâtiment et si les ressources de cet équipement sont trop limitées pour permettre d'effectuer les traitements nécessaires à la localisation, ainsi que des moyens de filtrage.

Ces moyens de filtrage comprennent des moyens pour filtrer, par filtre de Kalman 28, au moins certaines des données de navigation inertielle issues de la centrale inertielle ; et des moyens pour filtrer, par filtre particulaire 30, le résultat de position en intégrant les mesures WiFi mais aussi les données de navigation inertielle issues de la centrale inertielle dont au moins certaines sont corrigées par le filtre de Kalman,

Selon le mode de réalisation préféré, la centrale inertielle du terminal contient au moins l'un des dispositifs (capteurs) suivants permettant de:

- mesurer la vitesse angulaire, notamment un gyroscope,
- mesurer la direction angulaire du déplacement du terminal par rapport au nord magnétique, notamment un magnétomètre,
- mesurer l'accélération suivant au moins une direction de l'espace, notamment un accéléromètre,
- mesurer la pression atmosphérique, notamment une sonde barométrique,
- compter le nombre de pas effectués par un porteur du terminal, notamment un podomètre.

Les données provenant des différents capteurs sont collectées et mises en forme par un micro contrôleur. La trame ainsi constituée est expédiée à l'équipement (PDA, PC portable...) via une liaison RS232 ou une liaison sans fil (de type Bluetooth par exemple) afin de ne plus avoir les contraintes de câblage entre le terminal mobile et les capteurs de navigation inertielle.

Les capteurs accéléromètres permettent de savoir si l'utilisateur est en mouvement ou non, et ainsi de prendre en compte cette information dans le filtre particulaire utilisé en localisation radio.

Le comptage du nombre de pas effectués par l'utilisateur est aussi possible. L'évaluation de la distance est alors plus complexe à mettre en oeuvre, et nécessite un certain étalonnage du capteur (distance parcourue entre deux pas) pour conduire à une estimation de la distance parcourue. Cet étalonnage peut être effectué au cours du temps grâce aux mesures radio qui permettent de connaître la position de l'utilisateur. Ainsi un système d'auto-calibration du capteur accéléromètre est possible.

La sonde barométrique permet de connaître l'altitude à laquelle se trouve l'utilisateur. Ainsi il est possible de détecter lorsque ce dernier change d'étage par exemple (par les escaliers, ou par un ascenseur). Ce type d'information permet l'extension de la technique de localisation radio (Wi-Fi) en exploitant le plan du bâtiment dans les trois dimensions. Il est ainsi possible de donner au filtre le bon plan de l'étage dans lequel le mobile se déplace.

La sonde barométrique permet aussi de détecter des variations de pressions moins importantes: il est possible de détecter la station assise ou debout. Afin de s'affranchir du bruit lié au capteur une simple opération de filtrage passe-bas peut être effectuée sur la pression, par exemple:

$$P_t = 0.1 * P_t^{capteur} + 0.9 * P_{t-1}$$

Ensuite il est possible de convertir cette pression atmosphérique en variation d'altitude car la pression varie de un millibar tous les 10m. Ainsi en mesurant au cours du temps la variation de pression, il est possible de savoir si le porteur du terminal s'est élevé, ou est descendu.

Un autre objet de l'invention est un serveur de localisation configuré pour localiser, dans un environnement B équipé d'un ensemble de bornes 12, 14, 16, 18 de télécommunication d'un réseau local sans fil, un terminal 10. Le terminal est équipé au moins d'une centrale inertielle et de moyens pour mesurer, depuis le terminal, les puissances reçues de certaines au moins des bornes 12, 14, 16, 18 de télécommunication ; et le serveur comprend au moins des moyens de communication avec le terminal 10.

Ce serveur n'est pas obligatoire dans le sens où, si le terminal possède toutes les informations (par exemple, base de données puissance/position, plan du bâtiment...) et que ses ressources de calcul sont suffisantes, le terminal peut déterminer sa position, sans communiquer avec un serveur. Si une des deux conditions précédentes n'est pas satisfaite, alors il faut avoir recours à un tel serveur.

De manière classique, dans le cas d'une architecture déportée, le serveur comprend des moyens pour stocker

préalablement dans une base de données 24 de référence, une pluralité de vecteurs respectivement associés à une pluralité de points différents dudit environnement B.

**[0088]** Chaque vecteur a pour composantes des valeurs de puissances reçues en provenance des différentes bornes par un terminal positionné au point associé à ce vecteur.

Et le serveur comprend des moyens pour délivrer comme résultat de position celle tenant compte des mesures instantanées par WiFi et des informations remontant des capteurs de navigation par INS.

**[0089]** Dans un mode de réalisation, le serveur comprend, en outre, des moyens pour filtrer, par filtre de Kalman 28, au moins certaines des données de navigation inertielle issues de la centrale inertielle ; et des moyens pour filtrer, par filtre particulaire 30, le résultat de position retournée par « fingerprinting » en intégrant également les données de navigation inertielle issues des moyens de mesure inertielle, par exemple de la centrale inertielle, dont au moins certaines sont corrigées par le filtre de Kalman.

Enfin, l'invention porte sur un système de localisation d'un terminal 10 dans un environnement B équipé d'un ensemble de bornes 12, 14, 16, 18 de télécommunication d'un réseau local sans fil.

**[0090]** Le système comprend au moins un terminal 10 équipé au moins de moyens de mesure inertielle, par exemple d'une centrale inertielle délivrant des données de navigation inertielle et de moyens de communication avec un serveur de localisation si nécessaire.

Un serveur de localisation est donc équipé de moyens de communication avec le terminal 10.

**[0091]** Une pluralité de vecteurs, respectivement associés à une pluralité de points différents dudit environnement B, sont stockés préalablement dans une base de données 24 de référence ; chaque vecteur ayant pour composantes des valeurs de puissances reçues en provenance des différentes bornes par un terminal positionné au point associé à ce vecteur.

La puissance reçue de certaines au moins des bornes 12, 14, 16, 18 de télécommunication est mesurée depuis le terminal.

Une identification du point auquel se trouve le terminal est délivrée comme résultat de position.

Ce point étant défini comme celui dont le vecteur de référence associé est le plus proche, au sens de la distance euclidienne, du vecteur que forment les puissances mesurées depuis le terminal.

**[0092]** Selon l'invention, le système comprend, en outre, des moyens de filtrage utilisant un filtre de Kalman 28 pour filtrer au moins certaines des données de navigation inertielle issues de la centrale inertielle ; et des moyens de filtrage utilisant un filtre particulaire 30 pour filtrer le résultat de position, en intégrant également les données de navigation inertielle issues de la centrale inertielle dont au moins certaines sont corrigées par le filtre de Kalman.

**[0093]** Enfin, le système de localisation est, de préférence, tel que les bornes 12, 14, 16, 18 de télécommunication d'un réseau local sans fil sont des bornes de type Wi-Fi, Wimax, Bluetooth ou Zigbee.

**[0094]** Dans un autre mode de réalisation, l'invention peut être mise en oeuvre sous forme de programme d'ordinateur.

**[0095]** Dans ce cas, le dit programme comprend au moins une instruction permettant de déterminer la position à laquelle se trouve l'objet en fonction :

* d'au moins un premier signal reçu par des premiers moyens de localisation dudit système de localisation, le "au moins" premier signal provenant d'au moins une borne d'un réseau sans fil, et
* d'au moins un deuxième signal fourni par des deuxièmes moyens de localisation, différents desdits premiers moyens, dudit système de localisation.

**[0096]** Par ailleurs, l'invention peut être mise en oeuvre sous forme d'au moins un composant programmable apte à mettre en oeuvre au moins une instruction de localisation d'un objet équipé d'un système de localisation par détermination de la position à laquelle se trouve l'objet en fonction :

* d'au moins un premier signal reçu par des premiers moyens de localisation dudit système de localisation, le "au moins" premier signal provenant d'au moins une borne d'un réseau sans fil, et
* d'au moins un deuxième signal fourni par des deuxièmes moyens de localisation, différents desdits premiers moyens, dudit système de localisation.

**[0097]** L'invention peut être mise en oeuvre avantageusement dans les cas suivants :

- un visiteur qui ne connaît pas un site (environnement de bureaux avec plusieurs étages, ou bâtiments) veut se rendre auprès de son correspondant qui lui se trouve dans son bureau. Lorsque ce visiteur se présente à l'accueil, il lui est remis un objet communicant (terminal), comme un PDA par exemple, sur lequel il peut voir s'afficher sur l'écran un plan du site avec deux marqueurs. Un de ces marqueurs représente la position du visiteur dans l'environnement considéré, et l'autre celle de son correspondant (personne visitée). Ainsi il est possible au visiteur de se rendre auprès de son correspondant sans que celui ne se trouve dans l'obligation de venir le chercher à l'accueil,
- dans un hall d'exposition ou un musée, où le visiteur connaîtrait sa position par rapport au musée, mais en plus des

services pourraient lui être proposés suivant sa position à savoir, s'il se trouve dans un musée, une présentation des oeuvres qu'il a à côté de lui,

- dans un bâtiment hospitalier, où il s'agit de trouver le positionnement d'objets porteur de terminaux tels que, par exemple, du matériel spécifique pour blocs opératoires.

**Revendications**

1. Procédé de localisation d'un terminal (10) dans un environnement (B) équipé d'un ensemble de bornes (12, 14, 16, 18) de télécommunication d'un réseau local sans fil et à l'aide d'une base de données de référence dans laquelle sont préalablement stockés une pluralité de vecteurs respectivement associés à une pluralité de points différents dudit environnement (B), chaque vecteur ayant pour composantes des valeurs de puissances reçues en provenance des différentes bornes par un terminal positionné au point associé à ce vecteur, le terminal (10) comprenant des moyens de mesure inertielle, ledit procédé comprenant les étapes consistant à :

   • mesurer, depuis le terminal, les puissances reçues de certaines au moins des bornes (12, 14, 16, 18) de télécommunication,
   • délivrer comme résultat de position, une identification du point auquel se trouve le terminal, ce point étant défini comme celui dont le vecteur de référence associé est le plus proche du vecteur que forment les puissances mesurées depuis le terminal,
   • filtrer, par des moyens de filtrage (30), le résultat de position délivré,

   **caractérisé en ce que** l'étape de filtrage du résultat de position délivré, tient compte également des données de navigation inertielle fournies par les moyens de mesure inertielle, et **en ce que** le procédé comprend en outre :

   - une étape de correction consistant à corriger une dérive inertielle des moyens de mesure inertielle en tenant compte d'une trajectoire globale du terminal donnée par lesdits moyens de filtrage du résultat de position délivré.

2. Procédé selon la revendication 1, dans lequel il est prévu une étape de filtrage des données de navigation inertielle consistant à filtrer (28) au moins certaines des données de navigation inertielle issues des moyens de mesure inertielle.

3. Procédé de localisation selon l'une quelconque des revendications précédentes, dans lequel, lors de l'étape de filtrage du résultat de position délivré, on modélise une position possible que peut avoir le terminal par un ensemble de particules, une probabilité de présence étant affectée à chacune des dites particules.

4. Procédé selon la revendication 3, dans lequel, lors de l'étape de filtrage du résultat de position délivré, des paramètres sont modélisés en densités de probabilité afin de déterminer les probabilités de présence à affecter aux particules, lesdits paramètres comprenant au moins l'une des informations du groupe comportant des informations de puissances reçues, des informations de navigation inertielle et des informations relatives à l'environnement du terminal.

5. Procédé de localisation selon l'une des revendications 3 et 4, dans lequel, pour déterminer la position du terminal, il est prévu une étape de détermination a priori de la position des particules, tenant compte au moins, pour une particule, de sa dernière position connue, d'une vitesse de la particule et d'une information représentative d'un état du terminal, indiquant s'il se déplace ou non, obtenue à partir des données fournies par les moyens de mesure inertielle.

6. Procédé selon la revendication 5, dans lequel pour déterminer la position du terminal, il est prévu une étape de détermination a posteriori de la position des particules tenant compte de nouvelles mesures de puissances reçues de certaines au moins des bornes (12, 14, 16, 18) de télécommunication.

7. Terminal (10) configuré pour être localisé dans un environnement (B) équipé d'un ensemble de bornes (12, 14, 16, 18) de télécommunication d'un réseau local sans fil, le terminal comprenant au moins

   • des moyens de mesure inertielle,
   • des moyens pour mesurer, depuis le terminal, les puissances reçues de certaines au moins des bornes de télécommunication,
   • des moyens pour délivrer comme résultat de position, une identification du point auquel se trouve le terminal, défini comme celui dont un vecteur de référence associé est le plus proche du vecteur que forment les puissances mesurées depuis le terminal, ledit vecteur de référence étant extrait d'une base de données de référence contenant une pluralité de vecteurs de référence respectivement associés à une pluralité de points différents dudit environnement, chaque vecteur ayant pour composantes des valeurs de puissances reçues en provenance des différentes bornes par un terminal positionné au point associé à ce vecteur,

• des moyens de filtrage agencés pour filtrer le résultat de position délivré

**caractérisé en ce que** les moyens de filtrage filtrent le résultat de position délivré en tenant compte également de données de navigation inertielle issues des moyens de mesure inertielle et **en ce que** le terminal comprend en outre :

• des moyens de correction agencés pour corriger une dérive inertielle des moyens de mesure inertielle en tenant compte d'une trajectoire globale du terminal donnée par lesdits moyens de filtrage du résultat de position délivré.

8. Terminal selon la revendication 7, comprenant des moyens de communication avec un serveur de localisation.

9. Terminal selon l'une des revendications 7 et 8, comprenant des moyens pour filtrer au moins certaines des données de navigation inertielle issues des moyens de mesure inertielle.

10. Terminal selon l'une des revendications 7 à 9, comprenant des moyens pour stocker ladite base de référence.

11. Serveur de localisation configuré pour localiser, dans un environnement (B) équipé d'un ensemble de bornes (12, 14, 16, 18) de télécommunication d'un réseau local sans fil, un terminal (10) équipé au moins de moyens de mesure inertielle, le serveur comprenant au moins

• des moyens de communication avec le terminal,
• des moyens pour stocker dans une base de données de référence, une pluralité de vecteurs respectivement associés à une pluralité de points différents dudit environnement, chaque vecteur ayant pour composantes des valeurs de puissances reçues en provenance des différentes bornes par un terminal positionné au point associé à ce vecteur,
• des moyens pour délivrer comme résultat de position, une identification du point auquel se trouve le terminal, ce point étant défini comme celui dont le vecteur de référence associé est le plus proche, au sens de la distance euclidienne, du vecteur que forment les puissances mesurées depuis le terminal,
• des moyens de filtrage pour filtrer le résultat de position

**caractérisé en ce que** les moyens de filtrage filtrent le résultat de position délivré en tenant également compte de données de navigation inertielle issues de la centrale inertielle et **en ce que** le serveur comprend en outre:

- des moyens pour commander une correction d'une dérive inertielle des moyens de mesure inertielle du terminal en tenant compte d'une trajectoire globale du terminal donnée par lesdits moyens de filtrage du résultat de position délivré.

12. Système de localisation d'un terminal (10) dans un environnement (B) équipé d'un ensemble de bornes (12, 14, 16, 18) de télécommunication d'un réseau local sans fil, le système comprenant au moins

• un terminal (10) équipé au moins de moyens de communication avec un serveur de localisation, et d'une centrale inertielle délivrant des données de navigation inertielle,
• un serveur de localisation équipé de moyens de communication avec le terminal (10),
• des moyens de filtrage pour filtrer au moins certaines données de navigation,
système dans lequel
• une pluralité de vecteurs, respectivement associés à une pluralité de points différents dudit environnement, sont stockés préalablement dans une base de données de référence ; chaque vecteur ayant pour composantes des valeurs de puissances reçues en provenance des différentes bornes par un terminal positionné au point associé à ce vecteur,
• la puissance reçue de certaines au moins des bornes de télécommunication est mesurée depuis le terminal,
• une identification du point auquel se trouve le terminal est délivrée comme résultat de position, ce point étant défini comme celui dont le vecteur de référence associé est le plus proche, au sens de la distance euclidienne, du vecteur que forment les puissances mesurées depuis le terminal,
système **caractérisé en ce que**

• les moyens de filtrage filtrent au moins certaines des données de navigation inertielle issues de la centrale inertielle,
• des moyens de correction corrigent une dérive inertielle des moyens de mesure inertielle du terminal en tenant compte d'une trajectoire globale du terminal donnée par lesdits moyens de filtrage du résultat de position délivré.

13. Programme d'ordinateur pour terminal, pour la localisation dudit terminal dans un environnement (B) équipé d'un ensemble de bornes (12, 14, 16, 18) de télécommunication d'un réseau local sans fil, ledit programme comprenant des instructions de programme pour commander l'exécution par ledit terminal, lorsque le programme est exécuté par celui-ci, des étapes consistant au moins à :

• mesurer, depuis le terminal, les puissances reçues de certaines au moins des bornes (12, 14, 16, 18) de télécommunication,
• délivrer comme résultat de position, une identification du point auquel se trouve le terminal, ce point étant défini comme celui dont un vecteur de référence associé est le plus proche du vecteur que forment les puissances mesurées depuis le terminal, ledit vecteur de référence étant extrait d'une base de données (24) de référence comprenant une pluralité de vecteurs respectivement associés à une pluralité de points différents dudit environnement (B), chaque vecteur ayant pour composantes des valeurs de puissances reçues en provenance des différentes bornes par un terminal positionné au point associé à ce vecteur,
• filtrer, à l'aide de moyens de filtrage, le résultat de position délivré,
**caractérisé en ce que** le filtrage du résultat de position délivré tient compte également de données de navigation inertielle fournies par les moyens de mesure inertielle, et **en ce que** le programme comprend en outre une étape consistant à :
• corriger une dérive inertielle des moyens de mesure inertielle en tenant compte d'une trajectoire globale du terminal donnée par lesdits moyens de filtrage du résultat de position délivré.

14. Support de programme, lisible par un ordinateur, sur lequel est enregistré le programme selon la revendication 13.

## Claims

1. Method for locating a terminal (10) in an environment (B) equipped with a set of telecommunication stations (12, 14, 16, 18) of a wireless local area network and with the aid of a reference database in which are previously stored a plurality of vectors respectively associated with a plurality of different points of said environment (B), each vector having, as components, values of powers received from the various stations by a terminal positioned at the point associated with this vector, the terminal (10) comprising inertial measurement means, said method comprising the steps consisting in:

• measuring, from the terminal, the powers received from at least some of the telecommunication stations (12, 14, 16, 18),
• delivering, as position result, an identification of the point at which the terminal is situated, this point being defined as that for which the associated reference vector is closest to the vector constituted by the powers measured from the terminal,
• filtering, by filtering means (30), the position result delivered,

**characterized in that** the step of filtering the position result delivered takes account also of the inertial navigation data provided by the inertial measurement means, and **in that** the method furthermore comprises:

- a correction step consisting in correcting an inertial drift of the inertial measurement means by taking account of a global trajectory of the terminal as given by said means for filtering the position result delivered.

2. Method according to Claim 1, in which there is envisaged a step of filtering the inertial navigation data consisting in filtering (28) at least some of the inertial navigation data arising from the inertial measurement means.

3. Locating method according to any one of the preceding claims, in which, during the step of filtering the position result delivered, a possible position of the terminal is modelled by a set of particles, a probability of presence being assigned to each of said particles.

4. Method according to Claim 3, in which, during the step of filtering the position result delivered, parameters are modelled as probability densities so as to determine the probabilities of presence to be assigned to the particles, said parameters comprising at least one of the information items of the group comprising information about powers received, inertial navigation information and information relating to the environment of the terminal.

5. Locating method according to either of Claims 3 and 4, in which, to determine the position of the terminal, there is envisaged a step of a priori determination of the position of the particles, taking account at least, for a particle, of its last known position, of a velocity of the particle and of an information item representative of a state of the terminal, indicating whether or not it is moving, obtained on the basis of the data provided by the inertial measurement means.

6. Method according to Claim 5, in which, to determine the position of the terminal, there is envisaged a step of a posteriori determination of the position of the particles taking account of new measurements of powers received from at least some of the telecommunication stations (12, 14, 16, 18).

7. Terminal (10) configured so as to be located in an environment (B) equipped with a set of telecommunication stations (12, 14, 16, 18) of a wireless local area network, the terminal comprising at least

   • inertial measurement means,
   • means for measuring, from the terminal, the powers received from at least some of the telecommunication stations,
   • means for delivering, as position result, an identification of the point at which the terminal is situated, defined as that for which an associated reference vector is closest to the vector constituted by the powers measured from the terminal, said reference vector being extracted from a reference database containing a plurality of reference vectors respectively associated with a plurality of different points of said environment, each vector having, as components, values of powers received from the various stations by a terminal positioned at the point associated with this vector,
   • filtering means arranged so as to filter the position result delivered,

   **characterized in that** the filtering means filter the position result delivered by also taking account of inertial navigation data arising from the inertial measurement means, and **in that** the terminal furthermore comprises:

   • correction means arranged so as to correct an inertial drift of the inertial measurement means by taking account of a global trajectory of the terminal as given by said means for filtering the position result delivered.

8. Terminal according to Claim 7, comprising means for communicating with a locating server.

9. Terminal according to either of Claims 7 and 8, comprising means for filtering at least some of the inertial navigation data arising from the inertial measurement means.

10. Terminal according to one of Claims 7 to 9, comprising means for storing said reference base.

11. Locating server configured so as to locate, in an environment (B) equipped with a set of telecommunication stations (12, 14, 16, 18) of a wireless local area network, a terminal (10) equipped at least with inertial measurement means, the server comprising at least

   • means for communicating with the terminal,
   • means for storing, in a reference database, a plurality of vectors respectively associated with a plurality of different points of said environment, each vector having, as components, values of powers received from the various stations by a terminal positioned at the point associated with this vector,
   • means for delivering, as position result, an identification of the point at which the terminal is situated, this point being defined as that for which the associated reference vector is closest, in the sense of the Euclidean distance, to the vector constituted by the powers measured from the terminal,
   • filtering means for filtering the position result,

   **characterized in that** the filtering means filter the position result delivered by also taking account of inertial navigation data arising from the inertial platform and **in that** the server furthermore comprises:

   • means for ordering a correction of an inertial drift of the inertial measurement means of the terminal by taking account of a global trajectory of the terminal as given by said means for filtering the position result delivered.

**12.** System for locating a terminal (10) in an environment (B) equipped with a set of telecommunication stations (12, 14, 16, 18) of a wireless local area network, the system comprising at least

- a terminal (10) equipped at least with means for communicating with a locating server, and also equipped with an inertial platform delivering inertial navigation data,
- a locating server equipped with means for communicating with the terminal (10),
- filtering means for filtering at least some navigation data,

in which system

- a plurality of vectors, respectively associated with a plurality of different points of said environment, are previously stored in a reference database; each vector having, as components, values of powers received from the various stations by a terminal positioned at the point associated with this vector,
- the power received from at least some of the telecommunication stations is measured from the terminal,
- an identification of the point at which the terminal is situated is delivered as position result, this point being defined as that for which the associated reference vector is closest, in the sense of the Euclidean distance, to the vector constituted by the powers measured from the terminal, system **characterized in that**
- the filtering means filter at least some of the inertial navigation data arising from the inertial platform,
- correction means correct an inertial drift of the inertial measurement means of the terminal by taking account of a global trajectory of the terminal as given by said means for filtering the position result delivered.

**13.** Computer program for terminal, for locating said terminal in an environment (B) equipped with a set of telecommunication stations (12, 14, 16, 18) of a wireless local area network, said program comprising program instructions for ordering the execution by said terminal, when the program is executed by the latter, of the steps consisting at least in:

- measuring, from the terminal, the powers received from at least some of the telecommunication stations (12, 14, 16, 18),
- delivering, as position result, an identification of the point at which the terminal is situated, this point being defined as that for which an associated reference vector is closest to the vector constituted by the powers measured from the terminal, said reference vector being extracted from a reference database (24) comprising a plurality of vectors respectively associated with a plurality of different points of said environment (B), each vector having, as components, values of powers received from the various stations by a terminal positioned at the point associated with this vector,
- filtering, with the aid of filtering means, the position result delivered,

**characterized in that** the filtering of the position result delivered also takes account of inertial navigation data provided by the inertial measurement means, and **in that** the program furthermore comprises a step consisting in:

- correcting an inertial drift of the inertial measurement means by taking account of a global trajectory of the terminal as given by said means for filtering the position result delivered.

**14.** Program medium, readable by a computer, on which the program according to Claim 13 is recorded.

**Patentansprüche**

**1.** Verfahren zur Lokalisierung eines Endgeräts (10) in einer Umgebung (B), die mit einer Gruppe von Telekommunikationsanschlüssen (12, 14, 16, 18) eines drahtlosen lokalen Netzwerks ausgestattet ist, und mit Hilfe einer Bezugsdatenbank, in der vorab mehrere Vektoren gespeichert werden, die mehreren verschiedenen Punkten der Umgebung (B) zugeordnet sind, wobei jeder Vektor als Komponenten Leistungswerte hat, die von den verschiedenen Anschlüssen kommend von einem Endgerät empfangen werden, das an dem diesem Vektor zugeordneten Punkt positioniert ist, wobei das Endgerät (10) Trägheitsmesseinrichtungen enthält, wobei das Verfahren die Schritte aufweist, die darin bestehen:

- ausgehend von dem Endgerät die von mindestens bestimmten der Telekommunikationsanschlüsse (12, 14, 16, 18) empfangenen Leistungen zu messen,
- als Positionsergebnis eine Identifizierung des Punkts zu liefern, an dem sich das Endgerät befindet, wobei der Punkt als derjenige definiert ist, dessen zugeordneter Bezugsvektor dem Vektor am nächsten ist, den die vom Endgerät aus gemessenen Leistungen formen,
• durch Filtereinrichtungen (30) das gelieferte Positionsergebnis zu filtern,

**dadurch gekennzeichnet, dass** der Schritt des Filterns des gelieferten Positionsergebnisses ebenfalls Trägheitsnavigationsdaten berücksichtigt, die von den Trägheitsmesseinrichtungen geliefert werden, und dass das Verfahren außerdem enthält:

- einen Korrekturschritt, der darin besteht, eine Trägheitsdrift der Trägheitsmesseinrichtungen unter Berücksichtigung einer globalen Wegstrecke des Endgeräts, die durch die Filtereinrichtungen des gelieferten Positionsergebnisses angegeben wird, zu korrigieren.

2. Verfahren nach Anspruch 1, bei dem ein Schritt der Filterung der Trägheitsnavigationsdaten vorgesehen ist, der darin besteht, mindestens bestimmt der von den Trägheitsmesseinrichtungen stammenden Trägheitsnavigationsdaten zu filtern (28).

3. Lokalisierungsverfahren nach einem der vorhergehenden Ansprüche, bei dem im Schritt der Filterung des gelieferten Positionsergebnisses eine mögliche Position, die das Endgerät haben kann, durch eine Gruppe von Partikeln modellisiert wird, wobei jedem der Partikel eine Anwesenheitswahrscheinlichkeit zugewiesen ist.

4. Verfahren nach Anspruch 3, bei dem im Schritt der Filterung des gelieferten Positionsergebnisses Parameter in Wahrscheinlichkeitsdichten modelliert werden, um die den Partikeln zuzuweisenden Anwesenheitswahrscheinlichkeiten zu bestimmen, wobei die Parameter mindestens eine der Informationen der Gruppe enthalten, die empfangene Leistungsinformationen, Trägheitsnavigationsinformationen und Informationen betreffend die Umgebung des Endgeräts aufweist.

5. Lokalisierungsverfahren nach einem der Ansprüche 3 und 4, bei dem, um die Position des Endgeräts zu bestimmen, ein Schritt der A-priori-Bestimmung der Position der Partikel vorgesehen ist, unter Berücksichtigung zumindest, für ein Partikel, seiner letzten bekannten Position, einer Geschwindigkeit des Partikels und einer für einen Zustand des Endgeräts repräsentativen Information, die angibt, ob es sich bewegt oder nicht, erhalten ausgehend von den von den Trägheitsmesseinrichtungen gelieferten Daten.

6. Verfahren nach Anspruch 5, bei dem zur Bestimmung der Position des Endgeräts ein Schritt der A-posteriori-Bestimmung der Position der Partikel unter Berücksichtigung neuer Leistungsmessungen, die von mindestens bestimmten der Telekommunikationsanschlüsse (12, 14, 16, 18) empfangen werden, vorgesehen ist.

7. Endgerät (10), das konfiguriert ist, um in einer Umgebung (B) lokalisiert zu werden, die mit einer Gruppe von Telekommunikationsanschlüssen (12, 14, 16, 18) eines drahtlosen lokalen Netzwerks ausgestattet ist, wobei das Endgerät mindestens enthält

• Trägheitsmesseinrichtungen,
• Einrichtungen, um ausgehend vom Endgerät die von zumindest bestimmten der Telekommunikationsanschlüsse empfangenen Leistungen zu messen,
• Einrichtungen, um als Positionsergebnis eine Identifizierung des Punkts zu liefern, an dem sich das Endgerät befindet, definiert als derjenige, von dem ein zugeordneter Bezugsvektor dem Vektor am nächsten ist, den die vom Endgerät aus gemessenen Leistungen bilden, wobei der Bezugsvektor aus einer Bezugsdatenbank entnommen wird, die mehrere Bezugsvektoren enthält, die mehreren unterschiedlichen Punkten der Umgebung zugeordnet sind, wobei jeder Vektor als Komponenten Leistungswerte hat, die von den verschiedenen Anschlüssen kommend von einem Endgerät empfangen werden, das an dem diesem Vektor zugeordneten Punkt positioniert ist,
• Filtereinrichtungen, die eingerichtet sind, um das gelieferte Positionsergebnis zu filtern,

**dadurch gekennzeichnet, dass** die Filtereinrichtungen das gelieferte Positionsergebnis filtern, indem sie ebenfalls Trägheitsnavigationsdaten berücksichtigen, die von den Trägheitsmesseinrichtungen stammen, und dass das Endgerät außerdem enthält:

• Korrektureinrichtungen, die eingerichtet sind, um eine Trägheitsdrift der Trägheitsmesseinrichtungen unter Berücksichtigung einer globalen Wegstrecke des Endgeräts zu korrigieren, die durch die Filtereinrichtungen des gelieferten Positionsergebnisses angegeben wird.

8. Endgerät nach Anspruch 7, das Einrichtungen zur Kommunikation mit einem Lokalisierungsserver enthält.

9. Endgerät nach einem der Ansprüche 7 und 8, das Einrichtungen enthält, um mindestens bestimmte der von den Trägheitsmesseinrichtungen stammenden Trägheitsnavigationsdaten zu filtern.

10. Endgerät nach einem der Ansprüche 7 bis 9, das Einrichtungen enthält, um die Bezugsbank zu speichern.

11. Lokalisierungsserver, der konfiguriert ist, um in einer mit einer Gruppe von Telekommunikationsanschlüssen (12, 14, 16, 18) eines drahtlosen lokalen Netzwerks ausgestatteten Umgebung (B) ein Endgerät (10) zu lokalisieren, das mindestens mit Trägheitsmesseinrichtungen ausgestattet ist, wobei der Server mindestens enthält

   • Einrichtungen zur Kommunikation mit dem Endgerät,
   • Einrichtungen, um in einer Bezugsdatenbank mehrere Vektoren zu speichern, die mehreren verschiedenen Punkten der Umgebung zugeordnet sind, wobei jeder Vektor als Komponenten Leistungswerte hat, die von den verschiedenen Anschlüssen kommend von einem Endgerät empfangen werden, das an dem diesem Vektor zugeordneten Punkt positioniert ist,
   • Einrichtungen, um als Positionsergebnis eine Identifizierung des Punkts zu liefern, an dem sich das Endgerät befindet, wobei dieser Punkt als derjenige definiert wird, dessen zugeordneter Bezugsvektor im Sinne der euklidischen Entfernung dem Vektor am nächsten ist, den die vom Endgerät aus gemessenen Leistungen bilden,
   • Filtereinrichtungen, um das Positionsergebnis zu filtern,

   **dadurch gekennzeichnet, dass** die Filtereinrichtungen das gelieferte Positionsergebnis unter Berücksichtigung ebenfalls der von der Trägheitsnavigationszentrale stammenden Trägheitsnavigationsdaten filtern, und dass der Server außerdem enthält:

   - Einrichtungen, um eine Korrektur einer Trägheitsdrift der Trägheitsmesseinrichtungen des Endgeräts unter Berücksichtigung einer globalen Wegstrecke des Endgeräts zu steuern, die durch die Filtereinrichtungen des gelieferten Positionsergebnisses angegeben wird.

12. System zur Lokalisierung eines Endgeräts (10) in einer Umgebung (B), die mit einer Gruppe von Telekommunikationsanschlüssen (12, 14, 16, 18) eines drahtlosen lokalen Netzwerks ausgestattet ist, wobei das System mindestens enthält

   • ein Endgerät (10), das mindestens mit Einrichtungen zur Kommunikation mit einem Lokalisierungsserver und mit einer Trägheitsnavigationszentrale ausgestattet ist, die Trägheitsnavigationsdaten liefert,
   • einen Lokalisierungsserver, der mit Einrichtungen zur Kommunikation mit dem Endgerät (10) ausgestattet ist,
   • Filtereinrichtungen, um mindestens bestimmte Navigationsdaten zu filtern,
   ein System, bei dem
   • mehrere Vektoren, die mehreren verschiedenen Punkten der Umgebung zugeordnet sind, vorher in einer Bezugsdatenbank gespeichert werden; wobei jeder Vektor als Komponenten Leistungswerte hat, die von den verschiedenen Anschlüssen kommend von einem Endgerät empfangen werden, das an dem diesem Vektor zugeordneten Punkt positioniert ist,
   • die von mindestens bestimmten der Telekommunikationsanschlüsse empfangene Leistung vom Endgerät aus gemessen wird,
   • eine Identifizierung des Punkts, an dem sich das Endgerät befindet, als Positionsergebnis geliefert wird, wobei dieser Punkt als derjenige definiert wird, dessen zugeordneter Bezugsvektor im Sinne der euklidischen Entfernung dem Vektor am nächsten ist, den die vom Endgerät aus gemessenen Leistungen formen,
   wobei das System **dadurch gekennzeichnet ist, dass**
   • die Filtereinrichtungen mindestens bestimmte der von der Trägheitsnavigationszentrale stammenden Trägheitsnavigationsdaten filtern,
   • Korrektureinrichtungen eine Trägheitsdrift der Trägheitsmesseinrichtungen des Endgeräts unter Berücksichtigung einer globalen Wegstrecke des Endgeräts, die von den Filtereinrichtungen des gelieferten Positionsergebnisses angegeben wird, korrigieren.

13. Computerprogramm für ein Endgerät zur Lokalisierung des Endgeräts in einer Umgebung (B), die mit einer Gruppe von Telekommunikationsanschlüssen (12, 14, 16, 18) eines drahtlosen lokalen Netzwerks ausgestattet ist, wobei das Programm Programmanweisungen enthält, um die Ausführung durch das Endgerät, wenn das Programm von diesem ausgeführt wird, von Schritten zu steuern, die mindestens darin bestehen:

• ausgehend von dem Endgerät die von mindestens bestimmten der Telekommunikationsanschlüsse (12, 14, 16, 18) empfangenen Leistungen zu messen,

• als Positionsergebnis eine Identifizierung des Punkts, an dem sich das Endgerät befindet, zu liefern, wobei dieser Punkt als derjenige definiert wird, von dem ein zugeordneter Bezugsvektor dem Vektor am nächsten ist, den die ausgehend vom Endgerät gemessenen Leistungen formen, wobei der Bezugsvektor aus einer Bezugsdatenbank (24) entnommen wird, die mehrere Vektoren enthält, die je mehreren verschiedenen Punkten der Umgebung (B) zugeordnet sind, wobei jeder Vektor als Komponenten Leistungswerte hat, die von den verschiedenen Anschlüssen kommend von einem Endgerät empfangen werden, das an dem diesem Vektor zugeordneten Punkt positioniert ist,

• mit Hilfe von Filtereinrichtungen das gelieferte Positionsergebnis zu filtern,

**dadurch gekennzeichnet, dass** die Filterung des gelieferten Positionsergebnisses ebenfalls Trägheitsnavigationsdaten berücksichtigt, die von den Trägheitsmesseinrichtungen geliefert werden, und dass das Programm außerdem einen Schritt enthält, der darin besteht:

• eine Trägheitsdrift der Trägheitsmesseinrichtungen unter Berücksichtigung einer globalen Wegstrecke des Endgeräts zu korrigieren, die von den Filtereinrichtungen des Positionsergebnisses angegeben wird.

**14.** Computerlesbarer Programmträger, auf dem das Programm nach Anspruch 13 aufgezeichnet ist.

**Fig. 1**

FIGURE 2

24

**EP 1 886 517 B1**

## RÉFÉRENCES CITÉES DANS LA DESCRIPTION

**Documents brevets cités dans la description**

- FR 0401759

**Littérature non-brevet citée dans la description**

- **EVENNOU F et al.** map-aided indoor mobile positioning system using particle filter. *WIRELESS COMMUNICATIONS AND NETWORKING CONFERENCE, 2005 IEEE NEW ORLEANS,* 13 Mars 2005, ISBN 0-7803-8966-2, 2490-2494

- **KURTH D et al.** Experimental results in range-only localization with radio. *PROCEEDINGS OF THE 2003 IEEE/RSJ INTERNATIONAL CONFERENCE ON INTELLIGENT ROBOTS AND SYSTEMS. 5IROS 2003,* 27 Octobre 2003, ISBN 0-7803-7860-1, 974-979